# EUROPÄISCHE PATENTANMELDUNG

(11) **EP 1 106 633 A2**
(43) Veröffentlichungstag der Anmeldung: **13.06.2001**
(21) Anmeldenummer: 00124349.2
(22) Anmeldetag: 17.11.2000
(51) Int. Cl.: C08G 18/08, C08G 18/67, C08G 18/68, C09D 175/14

(54) **Polyurethan-Emulsionen**

(30) Priorität: 30.11.1999 DE 19957604
(71) Anmelder: BAYER AG, 51368 Leverkusen (DE)
(72) Erfinder: Weikard, Jan, Dr., 50670 Köln (DE); Lühmann, Erhard, 51375 Leverkusen (DE); Erdmann, Dieter, 47809 Krefeld (DE); Fischer, Wolfgang, Dr., 40668 Meerbusch (DE); Kremer, Wolfgang, 47647 Kerken (DE)

(57) **Zusammenfassung**

Die vorliegende Erfindung betrifft wäßrige Polyurethan-Emulsionen und ihre Verwendung als Beschichtungsmittel, beispielsweise zur Lackierung.

## Beschreibung

Die Erfindung betrifft wäßrige Polyurethan-Emulsionen, die unter dem Einfluß energiereicher Strahlung aushärten und ihre Verwendung als Beschichtungsmittel. Sie kommen beispielsweise in der Holz- und Möbellackierung zum Einsatz.

Aus der EP-A-0 012 339 sind wäßrige Dispersionen auf Basis strahlungshärtbarer Präpolymere bekannt, die durch Dispergierhilfsmittel wie Polyvinylpyrrolidone stabilisiert werden. Diese Dispersionen weisen jedoch den Nachteil auf, daß sie mit anderen alkalischen strahlungshärtbaren Dispersionen sowie alkalischen Polyacrylat-Dispersionen nicht mischbar sind. Darüber hinaus bleibt nach Abdunsten des Wassers durch die Verwendung der Dispergierhilfsmittel eine nicht unerhebliche Wassermenge im Film zurück, die bei der Härtung durch UV-Licht zur Störung der Filmoptik und -härte führen kann.

Strahlungshärtbare Polyurethandispersionen werden auch in EP-A-0 704 469, EP-A-0 753 531 , EP-A-0 870 788 und EP-A-0 872 502 beschrieben. Die dort beschriebenen Polyurethandispersionen, trocknen nach Abdunsten des Wassers und vor UV-Härtung bereits stark physikalisch an und zeigen nur geringe Penetration auf saugenden Untergründen wie Holz. Es kommt daher bei diesen Systemen nur zu einer unzureichenden Betonung der natürlichen Struktur des Holzes, die dem Fachmann als "Anfeuerung" bekannt ist. Weiterhin lassen sich die angetrockneten, aber nicht gehärteten Dispersionen nach dem Stand der Technik nur unzureichend wieder in Wasser dispergieren, was sowohl die Wiederverwendung als auch die Reinigung von Geräten, die zur Applikation der Dispersionen benötigt werden, erschwert.

Der vorliegenden Erfindung lag daher die Aufgabe zugrunde, strahlungshärtbare wäßrige Bindemittel bereitzustellen, die sowohl gut verträglich mit anderen Bindemitteln und frei von Dispergierhilfsmitteln sind als auch auf saugenden Untergründen gute Penetration und auf Holz eine gute Anfeuerung zeigen. Die Bindemittel sollen weiterhin auch nach dem Abdunsten des Wassers wieder gut in Wasser "redispergierbar" sein. Diese Aufgabe wird mit den erfindungsgemäßen Polyurethan-Emulsionen gelöst.

Gegenstand der Erfindung sind strahlungshärtbare, wäßrige Polyurethan-Emulsionen auf Basis von hydroxylgruppenhaltigen Polyesteracrylaten, erhältlich durch Polyaddition von
A) 40-90 Gew.-% eines hydroxylgruppenhaltigen Polyesteracrylats mit einem OH-Gehalt von 40 bis 200 mg KOH/g, das gegebenenfalls weitere mit Isocyanaten reaktive Verbindungen enthält, und
B) 0,5-20 Gew.-% einer oder mehrerer mono- und/oder difunktioneller gegenüber Isocyanatgruppen reaktiven Verbindung(en), die kationische, anionische und/- oder durch Ethergruppen dispergierend wirkende Gruppen enthält/enthalten oder solche Gruppen, die durch Salzbildung in entsprechende kationische oder anionische dispergierend wirkende Gruppen überführt werden können, mit
C) 10-50 Gew.-% eines oder mehrerer Di- und/oder Polyisocyanate
   sowie anschließende Dispergierung in Wasser und Umsetzung mit
D) 0,1-10 Gew.-% eines oder mehreren Di- und/oder Polyaminen,
wobei sich die Gew.-%-Angaben von (A) bis (D) zu 100 ergänzen, dadurch gekennzeichnet, daß die molaren Verhältnisse der Summe der gegenüber Isocyanaten reaktiven Gruppen in (A) und (B) zu Isocyanatgruppen in (C) von 0,8 : 1 bis 1,25 : 1 betragen und die Umsetzung der Komponenten (A) und (B) mit (C) derart erfolgt, daß zwischen 65 und 95% der Isocyanatgruppen in (C) mit den gegenüber Isocyanat reaktiven Gruppen von (A) und (B) reagieren .

Bei den hydroxylgruppenhaltigen Polyesteracrylaten nach (A) handelt es sich um Polykondensatiosprodukte von Di- oder Oligocarbonsäuren, bzw. falls zugänglich, deren Anhydriden (beispielsweise Adipinsäure, Sebacinsäure, Maleinsäureanhydrid, Fumarsäure und Phthalsäure) und di- und/oder höherfunktionellen Polyolen (z.B. Ethylenglykol, Propylenglykol, Diethylenglykol, Trimethylolpropan, Pentaerythrit, alkoxylierte Di- bzw. Polyole, wie das Anlagerungsprodukt von Ethylenoxid an Trimethylolpropan der OH-Zahl 550) und Acrylsäure und/oder Methacrylsäure.

Es können in diese Polyesteracrylate auch aus dem Stand der Technik allgemein bekannte, so beispielsweise in Progress in Organic Coatings, 9 (1981), 291 - 296 beschrieben, dispergierend wirkende Gruppen eingebaut werden. So können als Alkoholkomponente anteilig Polyethylenglykole und/oder Methoxypolyethylenglykole eingbaut werden. Als Verbindungen seien beispielsweise auf Alkoholen gestartete Polyethylenglykole, Polypropylenglykole und deren Blockcopolymere sowie die Monomethylether dieser Polyglykole genannt. Besonders geeignet ist Polyethylenglykol 1500 und/oder Polyethylenglykol-500-mono-methylether.

Weiterhin ist es möglich, einen Teil der (überschüssigen) Carboxylgruppen, insbesondere die der (Meth)acrylsäure, mit Mono-, Di- oder Polyepoxiden umzusetzen. Diese Reaktion kann insbesondere zur Erhöhung der OH-Zahl des Polyesteracrylats verwendet werden, da bei der Epoxid-Säure-Reaktion jeweils eine OH-Gruppe entsteht.

Die Herstellung von Polyesteracrylaten wird in DE-A-4 040 290, DE-A-3 316 592, P. K. T. Oldring (Ed.), Chemistry & Technology of UV & EB Formulations For Coatings, Inks & Paints, Vol. 2, 1991, SITA Technology, London, S. 123 - 135 beschrieben.

Alternativ können auch an sich bekannte hydroxylgruppenhaltige Polyepoxyacrylate, hydroxylgruppenhaltige Polyetheracrylate oder hydroxylgruppenhaltige Polyurethanacrylate mit OH-Zahlen von 40 bis 200 mg KOH/g eingesetzt werden sowie deren Mischungen untereinander und mit hydroxylgruppenhaltigen ungesättigten Polyestern sowie Mischungen mit Polyesteracrylaten oder Mischungen hydroxylgruppenhaltiger ungesättigter Polyester mit Polyesteracrylaten.

Weiterhin können in Komponente (A) auch anteilig, d.h. weniger als 30 Gew.-%, bevorzugt weniger als 10 Gew.-%, Diole mit kurzen Alkylketten (2 bis 10 Kohlenstoffatome) enthalten sein. Beispiele für solche Diole sind Ethylenglykol, Di- oder Triethylenglykol, 1,3- oder 1,4-Butandiol, Neopentylglykol, 1,6-Hexandiol oder Mischungen solcher Diole.

Weiterhin können in Komponente (A) auch anteilig, d.h. weniger als 30 Gew.-%, bevorzugt weniger als 5 Gew.-% Hydroxy-(C₁-C₆-Alkyl)-(meth)acrylate enthalten sein.

Kationisch, anionisch und/oder durch Ethergruppen dispergierend wirkende Verbindungen (B) sind solche, die beispielsweise Sulfonium-, Ammonium-, Carboxylat-, Sulfonat-Gruppen oder die Gruppen, die durch Salzbildung in die vorgenannten Gruppen überführt werden können, und/oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen. Vertreter für Verbindungen (B) sind Bis(hydroxymethyl)propionsäure, Bis(hydroxymethyl)buttersäure, Hydroxypivalinsäure, Äpfelsäure, Glykolsäure, Milchsäure, Glycin, Alanin, Taurin, 2-Aminoethylaminoethansulfonsäure, auf Alkoholen gestartete Polyethylenglykole, Polypropylenglykole und deren Blockcopolymere sowie die Monomethylether dieser Polyglykole. Besonders geeignet ist Bis(hydroxymethyl)propionsäure und Polyethylenglykol-500-mono-methylether.

Die Polyaddition kann mit aromatischen, araliphatischen, aliphatischen oder cycloaliphatischen Polyisocyanaten (C) erfolgen. Es können auch Mischungen solcher Polyisocyanate (C) eingesetzt werden. Beispiele geeigneter Polyisocyanate (C) sind Butylendiisocyanat, Hexamethylendiisocyanat (HDI), Isophorondisocyanat (IPDI), Trimethylhexamethylendiisocyanat (entspr. 2,2,4 und/oder 2,4,4-Trimethylhexamethylendiisocyanat), die isomeren Bis(4,4'-isocyanatocyclohexyl)methane, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Uretdion-, Iminooxadiazindionstruktur und Mischungen derselben. Bevorzugt sind Hexamethylendiisocyanat, Isophorondiisocyanat und die isomeren Bis(4,4'-isocyanatocyclohexyl)methane sowie deren Mischungen. Besonders bevorzugt ist Isophorondiisocyanat.

Di- und/oder Polyamine (D) dienen zum Erhöhen der Molmasse. Da diese Reaktion im wäßrigen Medium stattfindet, müssen die Di- und/oder Polyamine (D) reaktiver als Wasser gegenüber den Isocyanatgruppen sein. Exemplarisch seien genannt Ethylendiamin, 1,6-Hexamethylendiamin, Isophorondiamin, 1,3-, 1,4-Phenylendiamin, 4,4'-Diphenylmethandiamin, aminofunktionelle Polyethylenoxide bzw. Polypropylenoxide (bekannt unter dem Namen Jeffamin® , D-Reihe, [Huntsman Corp. Europe, Zavantem, Belgien]), Triethylentetramin und Hydrazin. Besonders bevorzugt ist Ethylendiamin.

Anteilig können auch Monoamine, wie z. B. Butylamin, Ethylamin und Amine der Jeffamin® M-Reihe (Huntsman Corp. Europe, Zavantem, Belgien), aminofunktionelle Polyethylenoxide und Polypropylenoxide zugesetzt werden.

Zur Herstellung der erfindungsgemäßen Polyesteracrylaturethan-Dispersionen können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren bzw. Abkömmlinge davon verwendet werden. Eine Zusammenfassung dieser Methoden findet sich in Methoden der Organischen Chemie, Houben-Weyl, 4. Auflage, Band E20/Teil 2, S.1682, Georg Thieme Verlag, Stuttgart, 1987. Erfahrungsgemäß am besten geeignet ist das Schmelz-Emulgier- und das Aceton-Verfahren. Besonders bevorzugt wird das Schmelz-Emulgier-Verfahren. Die Komponenten (A) und (B) werden zur Herstellung der Vorprodukte (Polyesteracrylaturethan-Lösungen) im Reaktor vorgelegt, falls das Verfahren es erfordert (z.B. beim Acetonverfahren, gegebenenfalls auch beim Schmelz-Emulgierverfahren) mit einem mit Wasser mischbaren aber gegenüber Isocyanatgruppen inerten Lösungsmittel verdünnt, beim Schmelz-Emulgierverfahren bevorzugt aber ohne Lösungsmittel, auf höhere Temperaturen, besonders im Bereich von 50 bis 120°C, aufgeheizt. Geeignete Lösungsmittel sind Aceton, Butanon, Tetrahydrofuran, Dioxan, Acetonitril, Dipropylenglykoldimethylether und 1-Methyl-2-pyrrolidon. Weiterhin können die zum Beschleunigen der Isocyanatadditionsreaktion bekannten Katalysatoren wie z. B. Triethylamin, 1,4-Diazabicyclo-[2,2,2]-oktan, Zinndioktoat oder Dibutylzinndilaurat mit vorgelegt werden. Zu diesen Mischungen tropft man das oder die Polyisocyanate (C). Die molaren Verhältnisse von gegenüber Isocyanaten reaktiven Gruppen in (A) und (B) zu Iscocyanatgruppen in (C) betragen von 0,8 : 1 bis 1,25:1, bevorzugt 0,96 : 1 bis 1,25 : 1, besonders bevorzugt 1:1. Die Umsetzung der Komponenten (A) und (B) mit (C) wird erfindungsgemäß jedoch nur bis zu einem Umsetzungsgrad von 65 bis 95%, bevorzugt 80 bis 90% bezogen auf die Gesamtmenge an NCO-Gruppen in (C) zugelassen.

Der Umsetzungsgrad wird üblicherweise durch Verfolgung des NCO-Gehalts der Reaktionsmischung überwacht. Dazu können sowohl spektroskopische Messungen (IR- oder NIR-Spektren) als auch chemische Analysen (Titrationen) von entnommenen Proben vorgenommen werden. Nach Erreichen des gewünschten NCO-Gehalts wird durch möglichst zügiges Absenken der Temperatur die weitere Umsetzung von (A) und (B) mit (C) stark verlangsamt. Wie weit die Reaktionstemperatur abgesenkt werden muß, richtet sich nach den verwendeten Reaktionspartnern (insbesondere die Reaktivität verschiedener Isocyanate kann sehr unterschiedlich sein) und kann durch weitere Verfolgung des NCO-Gehalts der Mischung überprüft werden. Nach der Herstellung der Polyesteracrylaturethan-Lösungen aus (A), (B) und (C) erfolgt, falls dies noch nicht in den Ausgangsmolekülen durchgeführt wurde, die Salzbildung der anionisch und/oder kationisch dispergierend wirkenden Zentren der Verbindungen (B). Im Falle anionischer Zentren sind dazu Basen wie Ammoniak, Triethylamin, Triethanolamin, Kaliumhydroxid oder Natriumcarbonat und im Falle kationischer Zentren Schwefelsäuredimethylester oder Bernsteinsäure vorteilhaft einsetzbar. Werden nur Verbindungen (B) mit Ethergruppen verwendet, entfällt der Neutralisationsschritt.

Im letzten Reaktionsschritt, bei dem im wäßrigen Medium eine Molmassenerhöhung und die Ausbildung der erfindungsgemäßen Polyesteracrylaturethan-Dispersionen stattfindet, werden die Polyesterurethan-Lösungen aus (A), (B) und (C) unter starkem Rühren entweder in das Dispergierwasser, das das oder die Polyamine (D) enthält, eingetragen oder man rührt umgekehrt die Dispergierwasser/Polyamine D-Mischung zu den Polyesterurethan-Lösungen aus (A), (B) und (C). Es erfolgt dann die Molmassenerhöhung durch Reaktion von noch vorhandenen Isocyanatgruppen der Umsetzungsprodukte aus (A), (B) und (C) mit den aminischen Wasserstoffen. Außerdem bilden sich die erfindungsgemäßen Dispersionen aus. Die eingesetzte Menge an Polyamin (D) hängt von den noch vorhandenen, nicht umgesetzten Isocyanatgruppen ab. Es kann dabei von Vorteil sein, nicht alle noch vorhanden Isocyanatgruppen mit Polyaminen (D) umzusetzen, sondern nur einen Teil. Die nicht umgesetzten Isocyanatgruppen reagieren dann langsam mit Wasser ab. Bevorzugt werden weniger als 50% der Iscyanatgruppen mit Polyaminen (D) umgesetzt.

In einer Variante des Verfahrens kann auch zunächst der Dispergierschritt durchgeführt werden und anschließend wird Komponente D), vorteilhaft verdünnt in Wasser, zugegeben.

Falls erwünscht, kann das organische Lösungsmittel - sofern vorhanden - abdestilliert werden. Die Dispersionen haben dann einen Festkörpergehalt von 20 - 60 Gew.- %, insbesondere 30 - 55 Gew.-%.

Die erfindungsgemäßen Polyesteracrylaturethan-Dispersionen ergeben nach Verdunsten des Wassers bereits ohne Zugabe von Hilfsstoffen staubtrockene bis leicht klebrige Überzüge. Durch anschließende strahlenchemisch und/oder radikalisch induzierte Vernetzung härten die Filme zu besonders hochwertigen, kratzfesten und chemikalienresistenten Lacküberzügen aus.

Bei der strahlenchemisch induzierten Polymerisation (UV-, Elektronen-, Röntgenoder Gamma-Strahlen) ist die UV-Härtung besonders bevorzugt. Die UV-Härtung wird in Gegenwart von Fotoinitiatoren ausgelöst. Als Fotoinitiatoren eignen sich z.B. aromatische Ketonverbindungen wie Benzophenone, Alkylbenzophenone, 4,4'- Bis(dimethylamino)benzophenon (Michlers Keton), Anthron und halogenierte Benzophenone. Weiter geeignet sind Acylphosphinoxide z. B. 2,4,6-Trimethyl-benzoyl- diphenylphosphinoxid, Phenylglyoxylsäureester, Anthrachinon und seine Derivate, Benzilketale und Hydroxyalkylphenone. Es können auch Gemische dieser Verbindungen eingesetzt werden.

Erfolgt die Härtung radikalisch, eignen sich wasserlösliche Peroxide oder wäßrige Emulsionen nicht wasserlöslicher Initiatoren. Diese Radikalbildner können in bekannter Weise mit Beschleunigern kombiniert werden.

Die erfindungsgemäßen Polyesteracrylaturethan-Dispersionen lassen sich durch die üblichen Techniken auf unterschiedlichste Substrate applizieren wie beispielsweise durch Spritzen, Walzen, Rakeln, Gießen, Streichen oder Tauchen. Werden die erfindungsgemäßen Polyesteracrylaturethan-Dispersionen auf Holz appliziert, erhält man Oberflächen, die sich durch eine besonders anspruchsvolle Oberflächenoptik und Betonung der natürlichen Zeichnung des Holzes (Anfeuerung) hervorheben. Die erfindungsgemäßen Polyesteracrylaturethan-Dispersionen eignen sich daher besonders für Grundierungen z.B. bei der mehrschichtigen Lackierung von Fertigparkett. Die Grundierungen können anschließend mit anderen bei der Parkettlackierung üblichen Beschichtungsmitteln wie z.B. wässrigen UV-härtbaren Polyurethandispersionen oder 100 prozentigen UV-härtbaren Polyester- und/oder Urethan-acrylaten überlackiert werden.

Weiterhin können andere saugfähige Substrate wie Papier, Karton, Leder u. a. aber auch Metalle und Kunststoffe damit beschichtet werden.

Man kann die erfindungsgemäßen Polyesteracrylaturethan-Dispersionen als alleiniges Lackbindemittel einsetzen oder mit den in der Lacktechnologie bekannten Bindemitteln, Hilfsstoffen und Additiven, wie beispielsweise Dispersionen, Pigmente, Farbstoffe oder Mattierungsmittel versetzen bzw. kombinieren. Insbesondere sind Kombinationen mit anderen Polyurethandispersionen oder mit Polyacrylatdispersionen problemlos möglich.

### Beispiele:

### Ungesättigter Polyester 1a):

In einem beheizbaren Reaktionsgefäß mit Rührer, Innenthermometer, Gaseinleitung und Destillationsaufsatz werden 706 g Maleinsäureanhydrid und 382 g Diethylengylkol 6 Stunden unter Überleiten eines Stickstoffstroms von 3 bis 41/h bei 150 °C gerührt. Anschließend werden weitere 611 g Diethylenglykol sowie 324 g Polyethylenglykol 1500 und 0,4 g Toluhydrochinon zugefügt und unter Beibehaltung des Stickstoffstroms und des Rührens wird bei 150 °C entstehendes Reaktionswasser abdestilliert. Nach 4 h wird die Temperatur auf 180 °C gesteigert und solange beibehalten, bis die Säurezahl des Produkts unter 15 mg KOH/g gefallen ist.

Das Produkt hat eine Jod-Farbzahl von 2,0, eine Viskosität von 17,7 Pa•s bei 23 °C und neigt bei längerem Stehen zur Kristallisation, die vor weiterem Umsatz des Produkts durch Erwärmen auf 60 °C wieder rückgängig gemacht werden kann.

### Polyetheracrylat 1b):

In einem beheizbaren Reaktionsgefäß mit Rührer, Innenthermometer, Gaseinleitung und Destillationsaufsatz werden 6028 g eines ethoxylierten Trimethylolpropans der OH-Zahl 550, 2837 g Acrylsäure, 3495 g Isooktan, 82 g p-Toluolsulfonsäure, 25 g Hydrochinonmonmethylether, 2 g 2,5-Di-tert.butyl-hydrochinon am Wasserabscheider zu kräftigem Sieden (Innentemperatur 90-100 °C) 16 Stunden unter Durchleiten eines Luftstroms von 3 bis 41/h erhitzt. Die Reaktion wird beendet, wenn die Säurezahl des Gemischs unter 7 mg KOH/g gefallen ist. Anschließend werden 168 g Glycidylmethacrylat zugegeben, und Isooktan wird im Vakuum (100 mbar) abdestilliert, wobei die Temperatur langsam auf 100 °C gesteigert wird. Die Reaktion wird beendet, wenn die Säurezahl des Produkts unter 2 mg KOH/g gefallen ist.

Das Produkt hat eine Jod-Farbzahl von 0,2, eine Viskosität von 170 mPa•s bei 23 °C und eine OH-Zahl von 143 mg KOH/g.

### Polyesteracrylat 2):

In einem beheizbaren Reaktionsgefäß mit Rührer, Innenthermometer, Gaseinleitung und Destillationsaufsatz werden 734 g eines ethoxylierten Trimethylolpropans der OH-Zahl 550, 734 g Acrylsäure, 268 g Cyclohexan, 10 g p-Toluolsulfonsäure, 3 g Hydrochinonmonmethylether, 0,2 g 2,5-Di-tert.butyl-hydrochinon am Wasserabscheider zu kräftigem Sieden (Innentemperatur 85-95 °C) 16 Stunden unter Durchleiten eines Luftstroms von 3 bis 41/h erhitzt. Die Reaktion wird beendet, wenn die Säurezahl des Gemischs unter 4 mg KOH/g gefallen ist. Anschließend wird Cyclohexan im Vakuum (100 mbar) abdestilliert, wobei die Temperatur langsam auf 100 °C gesteigert wird.

Das Produkt hat eine Jod-Farbzahl von 0,7, eine Viskosität von 350 mPa•s bei 23 °C und eine OH-Zahl von 65 mg KOH/g.

### Polyesteracrylat 3)

In einem beheizbaren Reaktionsgefäß mit Rührer, Innenthermometer, Gaseinleitung und Destillationsaufsatz werden 58,8 g Maleinsäureanhydrid, 734,4 g ethoxiliertes Trimethylolpropan der OH-Zahl 550, 77,6 g Polyethylenglykol 1500, 78,4 g Diethylenglykol, 12,5 g p-Toluolsulfonsäure, 0,1 g Toluhydrochinon und 300 g Isooktan 4 Stunden unter Überleiten eines Stickstoffstroms von 3 bis 41/h unter Rückfluß (ca. 100 °C) gerührt. Anschließend werden zum abgekühlten Gemisch 345,6 g Acrylsäure, 3,5 g p-Toluolsulfonsäure, 3,6 g Hydrochinonmonomethylether und 0,3 g 2,5-Ditert.butylhydrochinon gegeben. Am Wasserabscheider wird zu kräftigem Sieden (Innentemperatur 85-95 °C) für ca. 14 Stunden unter Durchleiten eines Luftstroms von 3 bis 4 l/h erhitzt. Die Reaktion wird beendet, wenn die Säurezahl des Gemischs unter 4 mg KOH/g gefallen ist. Nach Abkühlen auf 80° C werden 36,8 g des Diglycidylethers des Bisphenol-A zugesetzt, und Isooktan wird im Vakuum (50 mbar) abdestilliert, wobei die Temperatur langsam auf 95 °C gesteigert wird.

Das Produkt hat eine Jod-Farbzahl von 0,7, eine Viskosität von 390 mPa•s bei 23 °C und eine OH-Zahl von 128 mg KOH/g.

### PUR-Emulsion 1):

In einem Reaktionsgefäß mit Rührer, Innenthermometer, Gaseinleitung (Luftstrom 2 bis 3 l/h) und Tropftrichter werden 31,8 g des ungesättigten Polyesters 1a), 198,7 g des Polyetheracrylats 1b), 7,9 g Dimethylolpropionsäure, 0,3 g Dibutylzinndilaurat und 0,2 g Toluhydrochinon kurz bei 100 °C homogensiert. Bei 65 °C wird ein Gemisch von 53,3 g IPDI und 20,2 g HDI derart zugetropft, daß die Temperatur nicht über 70 °C steigt. Es wird solange bei 65 °C gerührt, bis die Reaktionsmischung einen NCO-Gehalt unter 1,7% enthält. Dann wird auf 50 °C abgekühlt, und es werden schnell 3,2 g Triethylamin und 3,6 g Diisopropylethylamin zugegeben. Nach 30 min werden unter schnellem Rühren 420 g Wasser von 40 °C zugefügt. Nachdem sich die Dispersion ausgebildet hat, werden 2,4 g Ethylendiamin in 9,6 g Wasser zugefügt. Nach 2 h Nachrühren bei RT wird das Produkt filtriert.
Viskosität 120 mPa•s bei 23 °C.

### PUR-Emulsion 2):

Das Beispiel PUR-Emulsion 1) wird mit folgenden Änderung wiederholt: Vorgelegt werden 240 g Polyesteracrylat 2), 9,6 g Dimethylolpropionsäure, 0,3 g Dibutylzinndilaurat. Zugetropft werden 42,6 g IPDI. Es wird solange bei 65 °C gerührt, bis die Reaktionsmischung einen NCO-Gehalt unter 1,1% enthält.

Dann wird auf 50 °C abgekühlt, und es werden schnell 3,7 g Triethylamin und 4,5 g Diisopropylethylamin zugegeben. Nach 30 min werden unter schnellem Rühren 438 g Wasser von 40 °C zugefügt. Nachdem sich die Dispersion ausgebildet hat, werden 0,5 g Ethylendiamin in 2,0 g Wasser zugefügt. Nach 2 h Nachrühren bei RT wird das Produkt filtriert.
Viskosität 24 mPa•s bei 23 °C.

### PUR-Emulsion 3):

Das Beispiel PUR-Emulsion 1) wird mit folgenden Änderung wiederholt: Vorgelegt werden 199,0 g Polyesteracrylat 3), 6,0 g Dimethylolpropionsäure, 6,4 g Methoxypolyethylenglykol 500, 0,3 g Dibutylzinndilaurat. Zugetropft werden 64,0 g IPDI. Es wird solange bei 65 °C gerührt, bis die Reaktionsmischung einen NCO-Gehalt unter 1,3% enthält. Dann wird auf 50 °C abgekühlt, und es werden schnell 2,2 g Triethylamin und 2,9 g Diisopropylethylamin zugegeben. Nach 30 min werden unter schnellem Rühren 412 g Wasser von 23 °C zugefügt. Nachdem sich die Dispersion ausgebildet hat, werden 0,6 g Ethylendiamin in 2,3 g Wasser zugefügt. Nach 2 h Nachrühren bei RT wird das Produkt filtriert.
Viskosität 17 mPa•s bei 23 °C.

### Anwendungsbeispiele:

Die erfindungsgemäßen Polyurethandispersionen (PUR 1, PUR 2, PUR 3) sowie als Vergleich die UV-härtbaren Dispersionen Laromer® PE 55W (Polyesteracrylat mit Dispergierhilfsmittel, BASF) und Bayhydrol® UV VP LS 2282 (stark physikalisch antrocknende, UV-härtbare PUR-Dispersion, Bayer AG)

| | | PUR 1 | PUR 2 | PUR 3 | Laromer PE 55W | Bayhydrol UV VP LS 2282 |
|---|---|---|---|---|---|---|
| Festköpergehalt | 1) | 40 Gew.-% | 40 Gew.-% | 40 Gew.-% | 49 Gew.-% | 40 Gew.-% |
| pH-Wert | 2) | 7,3 | 8,4 | 7,9 | 4,6 | 8,3 |
| Viskosität | 3) | 120 mPas | 24 mPas | 17 mPas | 466 mPas | 20 mPas |
| Aussehen der Emulsion | 4) | Leicht kolloidal | Leicht kolloidal | Leicht kolloidal | Milchig | Leicht kolloidal |
| Pendelhärte | 5) | 129 113 102 | 99 72 44 | 140 122 91 | 79 64 38 | 165 151 136 |
| Teilchengröße | 6) | 87 | 109 | 129 | 650 | 150 |
| Anfeuerung | 7) | 0 | 0 | 0 | 0 | 4 |
| Wasserfestigkeit | 8) | 0 | 0 | 0 | 0 | 0 |
| Ethanolfestigkeit | 9) | 0 | 0 | 0 | 0 | 0 |
| Verträglichkeit mit Neocryl XK 55 | 10) | i.O Glasaufzug leicht trübe | i.O Glasaufzug leicht trübe | i.O Glasaufzug leicht trübe | i.O. Glasaufzug trübe | i.O Glasaufzug leicht trübe |
| Verträglichkeit mit NeoRad R450 | 10) | i.O Glasaufzug klar | i.O. Glasaufzug klar | i.O. Glasaufzug klar | Instabil | i.O Glasaufzug klar |
| Verträglichkeit mit Luhydran 848 S | 10) | i.O Glasaufzug klar | i.O Glasaufzug klar | i.O Glasaufzug klar | Instabil | i.O Glasaufzug klar |
| Verträglichkeit mit Joncryl SCX 8222 | 10) | i.O Glasaufzug trübe | i.O. Glasaufzug trübe | i.O. Glasaufzug trübe | Instabil | i.O Glasaufzug trübe |
| Verträglichkeit mit Bayhydrol UV VP LS 2282 | 10) | i.O. Glasaufzug klar | i.O Glasaufzug klar | i.O Glasaufzug klar | Instabil | i.O Glasaufzug klar |

| | | | | | | |
|---|---|---|---|---|---|---|
| 1) nach DIN EN ISO 3251 ( 1 g 125 °C) | | | | | | |
| 2) nach DIN 53785 | | | | | | |
| 3) Rotationsviskosimeter 23 °C | | | | | | |
| 4) Visuelle Beurteilung | | | | | | |
| 5) Bindemitteldispersion + 1,5 % Irgacure® 500 (Fa. Ciba); Naßfilm 150 µm; 60 min Trocknung bei 20 - 23°C; UV-Härtung Hg-Lampe 80 W/cm a) 3 m/min Vorschub ; b) 5 m/min Vorschub ; c) 10 m/min Vorschub; gemessen: Pendelhärte nach König | | | | | | |
| 6) nach Laser-Korrelations-Spektrometrie-Messung | | | | | | |
| 7) Filmaufzug auf Nußbaum, s. Pkt. 5 ; Beurteilung visuell nach Noten : Note 0 = bestes Resultat; Note 5 = schlechtestes Resultat | | | | | | |
| 8) Kreuzaufzug mittels Kastenrakel; 2 ∗ 150 um Naßfilm auf Ahorn mit Zwischentrocknung und Zwischenschliff, s.Pkt. 5; Belastung 16 h. ( s.a. DIN 68861 ) | | | | | | |
| 9) s. Pkt. 8 | | | | | | |
| 10) Abmischung 1:1, dann Beurteilung, ob die Abmischung instabil wurde ( z.B. sehr hoher Viskositätsanstieg oder Koagulation ); wenn möglich, wurde 150 µm Naßfilm hergestellt und bei 20 - 23 °C getrocknet und dann die Filmklarheit visuell beurteilt. | | | | | | |

Neocryl® XK 55 (Acrylat-Dispersion, Zeneca)
NeoRad® R450 (UV-härtbare PUR-Dispersion, Zeneca);
Luhydran® 848S (Acrylat-Dispersion, BASF);
Joncryl® SCX 8222 (Acrylat-Dispersion, Jonssen);
Bayhydrol® UV VP LS 2282(UV-härtbare PUR-Dispersion, Bayer AG).

## Patentansprüche

1. Strahlungshärtbare, wäßrige Polyurethanemulsionen auf Basis von hydroxylgruppenhaltigen Polyesteracrylaten, erhältlich durch Polyaddition von
A) 40-90 Gew.-% eines hydroxylgruppenhaltigen Polyesteracrylats mit einem OH-Gehalt von 40 bis 200 mg KOH/g, das gegebenenfalls weitere mit Isocyanaten reaktive Verbindungen enthält, und
B) 0,5-20 Gew.-% einer oder mehrerer mono- und/oder difunktioneller, gegenüber Isocyanatgruppen reaktiven Verbindung(en), die kationische, anionische und/oder durch Ethergruppen dispergierend wirkende Gruppen enthält/enthalten oder solche Gruppen, die durch Salzbildung in entsprechende kationische oder anionische dispergierend wirkende Gruppen überführt werden können, mit
C) 10-50 Gew.-% eines oder mehrerer Di- und/oder Polyisocyanate
sowie anschließende Dispergierung in Wasser und Umsetzung mit
D) 0,1-10 Gew.-% eines oder mehreren Di- und/oder Polyaminen,
wobei sich die Gew.-%-Angaben von (A) bis (D) zu 100 ergänzen, dadurch gekennzeichnet, daß die molaren Verhältnisse von Summe der Hydroxygruppen in (A) und der gegenüber Isocyanaten reaktiven Gruppen in (B) zu den Iscocyanatgruppen in (C) von 0,8 : 1 bis 1,25 : 1 betragen und die Umsetzung der Komponenten (A) und (B) mit (C) derart erfolgt, daß zwischen 65 und 95% der Isocyanatgruppen in (C) reagieren.

2. Polyurethanemulsionen gemäß Anspruch 1, dadurch gekennzeichnet, daß die molaren Verhältnisse von Summe der Hydroxygruppen in (A) und der gegenüber Isocyanaten reaktiven Gruppen in (B) zu Isocyanatgruppen in (C) von 0,96 : 1 bis 1,25 : 1 betragen.

3. Polyurethanemulsionen gemäß Ansprüchen 1 bis 2, dadurch gekennzeichnet, daß Komponente (A) anteilig C₂-C₁₀-Alkyldiole enthält.

4. Polyurethanemulsionen gemäß Ansprüchen 1 bis 3, dadurch gekennzeichnet, daß Komponente (A) anteilig Hydroxy-(C₁-C₆-Alkyl)-(meth)acrylate enthält.

5. Verfahren zur Herstellung der Polyurethanemulsionen gemäß Ansprüchen 1 bis 4, dadurch gekennzeichnet, daß die Komponenten (A) und (B) zur Herstellung der Vorprodukte im Reaktor vorgelegt werden, gegebenenfalls mit einem mit Wasser mischbaren aber gegenüber Isocyanatgruppen inerten Lösungsmittel verdünnt werden, auf höhere Temperaturen aufgeheizt werden, gegebenenfalls unter Mitvorlage der zum Beschleunigen der Isocyanatadditionsreaktion bekannten Katalysatoren, zu diesen Mischungen das oder die Polyisocyanate (C) dosiert werden, wobei die molaren Verhältnisse von gegenüber Isocyanaten reaktiven Gruppen in (A) und (B) zu Iscocyanatgruppen in (C) von 0,8 : 1 bis 1,25 : 1 betragen und die Umsetzung der Komponenten (A) und (B) mit (C) so gesteuert wird, daß ein Umsetzungsgrad von 65 bis 95% bezogen auf die Gesamtmenge an NCO-Gruppen in (C) erreicht wird, anschließend, falls dies noch nicht in den Ausgangsmolekülen durchgeführt wurde, die Salzbildung der anionisch und/oder kationisch dispergierend wirkenden Zentren der Verbindungen (B) durchgeführt wird, und in einem anschließenden Reaktionsschritt werden die Polyesterurethan-Lösungen aus (A), (B) und (C) unter starkem Rühren entweder in das Dispergierwasser, das das oder die Polyamine (D) enthält, eingetragen oder man rührt umgekehrt die Dispergierwasser/Polyamine D-Mischung zu den Polyesterurethan-Lösungen aus (A), (B) und (C).

6. Verwendung der Polyurethanemulsionen gemäß Ansprüchen 1 bis 4 als Bindemittel für Lacke.

7. Verwendung gemäß Anspruch 6 bei der Herstellung von Möbeln.

8. Verwendung gemäß Anspruch 6 bei der Beschichtung von Holz, Leder, Papier, Karton oder Metallen.
